# EUROPEAN PATENT SPECIFICATION

(11) **EP 0 753 384 B1**
(45) Date of publication and mention of the grant of the patent: **16.06.1999**
(21) Application number: 96500094.6
(22) Date of filing: 04.07.1996
(51) Int. Cl.: B25J 9/00, B25J 9/02, B08B 3/02

(54) **Robot for machined parts washing machines**
Roboter zum Waschen von Werkstücken
Robot de lavage de pièces usinées

(30) Priority: 12.07.1995 ES 9501403
(43) Date of publication of application: 15.01.1997
(73) Proprietor: INGENIERIA AGULLO, S.A., E-08006 Barcelona (ES)
(72) Inventor: Agullo Negui, Miguel, 08006 Barcelona (ES)
(74) Representative: SUGRANES - VERDONCES - FERREGÜELA

(56) References cited:
- EP-A- 0 232 999
- EP-A- 0 494 804
- US-A- 4 850 382
- US-A- 5 167 720

## Description

### Technical field of the invention

The present invention relates to a robot for machined parts washing machines, of the type provided with movement on the three Cartesian axes.

In particular, the present invention relates to a robot of the said type which includes a first carriage which slides along first horizontal guides, which make up the direction of the "x" axis, while second horizontal guides are mounted on said first carriage, arranged perpendicularly to the first guides in the direction of the "y" axis, on which there slides at least a second carriage on which is mounted a hollow vertical bar movable in the direction of the "z" axis.

The robot is of the type also comprising a connector supplied with washing fluid through a duct fixed to the connector, said connector having a rotating part, a rotating washing jet supplied continuously with a washing fluid through the connector whose static part is connected to the duct, the connector being fitted inside the washing chamber of the washing machine.

### Background of the invention

Many machined parts forming components of kinematic and dynamic systems are provided with orifices and ducts to channel and receive lubricating or cooling fluids, orifices and ducts which, after the cold machining, hot working and chemical and/or mechanical treatment of the parts, are normally dirty due to residual products - such as cutting oils, remains of drawn wires, pickling process residues, adhered sand, burrs, etc. - which must be submitted to effective and precise washing and/or deburring before the parts are incorporated into the mechanical system of which they form part.

Currently known in the art are devices for the precision washing and/or deburring of machined parts, the operations being carried out by jets of pressurized washing fluid or abrasive suspensions ejected by washing jets.

Similarly known and used for the positioning of these jets with respect to the machined parts to be washed are mechanical devices and Cartesian handling robots, provided with capacity for movement along three orthogonal Cartesian axes designed into the jets. Two of these axes are typically on a horizontal plane parallel to the ground ("x" and "y" axes), while the third is vertical and perpendicular to the two previous axes ("z" axis)

Such a mechanical device is described, e.g., in US-A-5,167,720, which describes an apparatus and method for treating jet engine components with high pressure water, wherein movement along each of three orthogonal Cartesian axes is effected by a single respective carriage or gantry body, slidable on a guide, the apparatus also comprising a connector supplied with washing fluid through a duct fixed to the connector, said connector having a rotating part, a rotating washing jet supplied continuously with a washing fluid through the connector whose static part is connected to the duct, the connector being fitted inside the washing chamber of the washing machine.

These current handling robots nevertheless present the initial disadvantage that the number of jets they incorporate is limited, which sets limits on the production capacity of the washing machines.

For correct execution of the washing operation the washing jets should be provided with rotation movement, provided by an actuation device which is ideally built into the robot and coupled appropriately to the fluid inlet, which last is provided with linear movement. However, although rotary gaskets or connectors are known which couple a first fixed duct, through which there travels fluid provided with linear movement, to a second duct or receptacle for the fluid, provided with a rotating movement, in the current Cartesian handling robots for machined parts washing machines this problem of coupling has not been solved satisfactorily.

### Description of the invention

The object of the present invention is to solve the disadvantage outlined above and to provide an effective solution for the problem of coupling likewise outlined, by means of a triple-axis handling robot applied to a washing operation with washing jets.

The present invention achieves this object by providing a robot of the aforesaid type, characterized in that it comprises two second carriages, each of which is provided with a hollow tubular arm to the interior of and coaxial to the respective hollow vertical bar, supported by its ends on bearings and able to rotate about is own axis when driven by a motor, the lower end of the hollow tubular arm being attached solidly to the rotating part of the connector, so that the latter is connected by its upper end to the arm and by the lower end to the washing jet, so that as the arm rotates so too does the washing jet, the static part of the connector being connected to the hollow vertical bar.

According to another characteristic of the present invention, the two independent second carriages are mounted sliding on respective pairs of guides, and each of them is provided with its corresponding assembly made up of a hollow vertical bar and a hollow tubular arm, with each of the said second carriages being pulled by a respective motor, while the two hollow tubular arms are driven simultaneously and in synchronized fashion by a single motor supported rigidly by a bracket attached to the bar and actuating the two arms by means of two bevel-gear boxes, each of which is provided with a vertical bottom output, attached to the respective hollow tubular arm, and a horizontal output associated with the motor shaft.

In accordance with another characteristic of the invention, the hollow vertical bars are actuated simultaneously in an ascending or descending direction by means of a single motor mounted on one of the said second carriages, the shaft of said motor being provided with pinions which act upon corresponding racks joined respectively onto the hollow vertical bars.

The present invention also has as a characteristic the fact that each washing jet is attached to its respective hollow tubular arm by means of a set of gearwheels, thus enabling each washing jet to rotate about its vertical axis.

### Brief description of the drawings

The scope of the innovative design and the advantages achieved with the present invention will be revealed from the detailed description, provided solely by way of non-restrictive example, of a preferred embodiment of the invention, in relation to the attached drawings, in which:
Fig. 1 is a plan view of the robot of the invention, showing the devices for movement along the "x" and "y" axes:
Fig. 2 is an elevation view from "A" of Fig. 1 of the robot of the invention, showing the devices for movement along the "x" and "z" axes, for ascent and descent of the jet;
Fig. 3 is a partially sectioned elevation view from "B" of Figs. 1 and 2, showing the synchronized actuation device of the washing jets provided on the robot of the present invention;
Fig. 4 is an elevation view, also from "B" of Figs. 1 and 2, of the robot of the invention with the devices of Fig. 3 incorporated, and showing the devices necessary for movement along the "y" and "z" axes; and
Fig. 5 is a plan view in partial section along "C-C" of Fig. 4, and on a slightly enlarged scale of the part of the devices for synchronized ascent and descent of the jets of the robot of the invention.

### Detailed description of the drawings

In the detailed description which follows of a preferred embodiment of the invention and in the attached drawings, where the numerical references are accompanied by letter references, the latter refer merely to one of the two equal parts and therefore have the same numerical reference, which can be duplicated. In particular, and unless stated otherwise, what is set out in the following description for each one of the parts which may bear the letters "A" or "B" is likewise applicable to the other part with the same numerical reference.

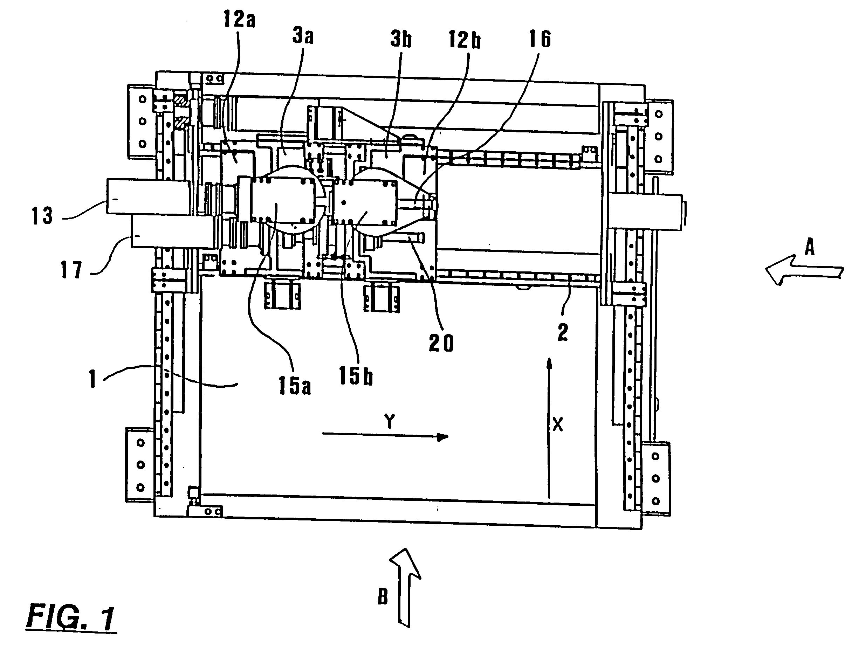

Fig. 1 shows a plan view of the Cartesian handling robot of the invention, with a first carriage 1 which slides along some first horizontal guides, forming the "x" axis. On the first carriage are mounted some horizontal guides 2, perpendicular to the first guides and making up the "y" axis.

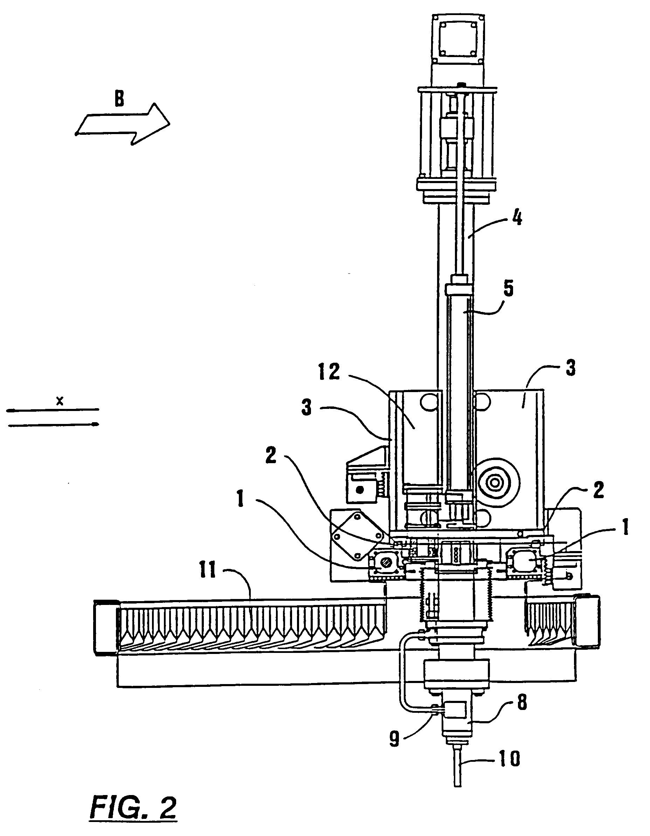

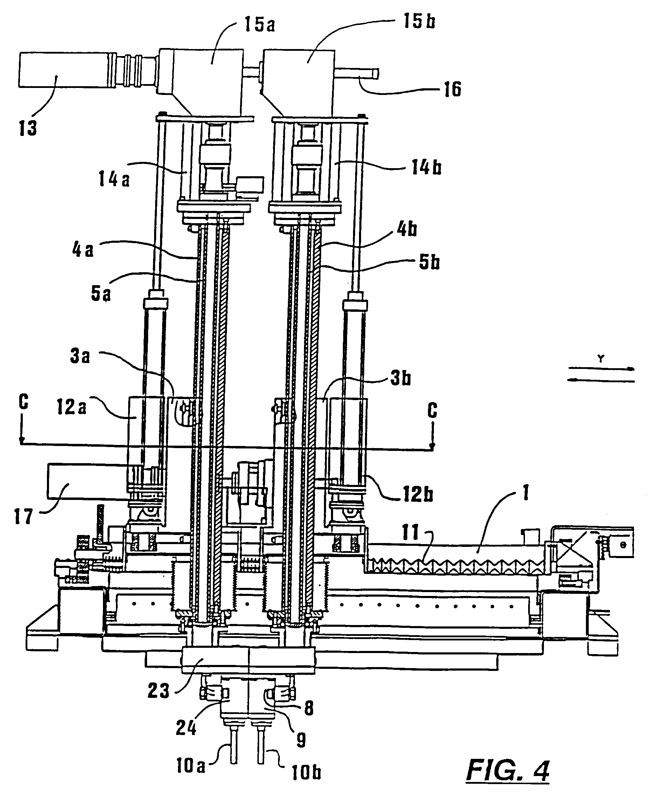

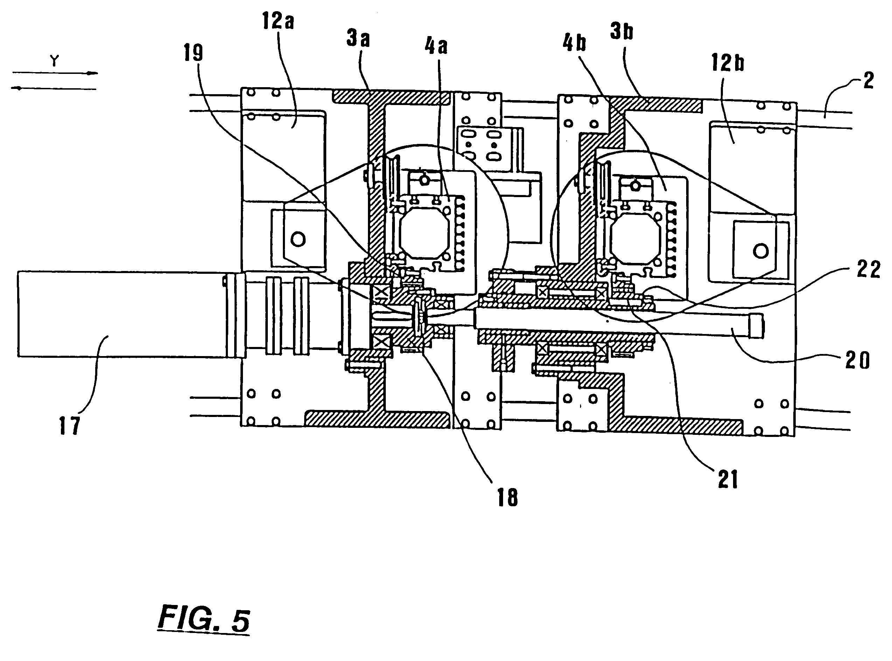

Fig. 2 also shows clearly the carriage 1 which slides on guide skates in direction "x". On carriage 1 are mounted second guides 2, on which two second carriages 3a and 3b (see also Figs. 4 and 5) can slide and on each of which are mounted in turn the two hollow vertical bars 4a and 4b, which move on themselves in the direction of the "z" axes.

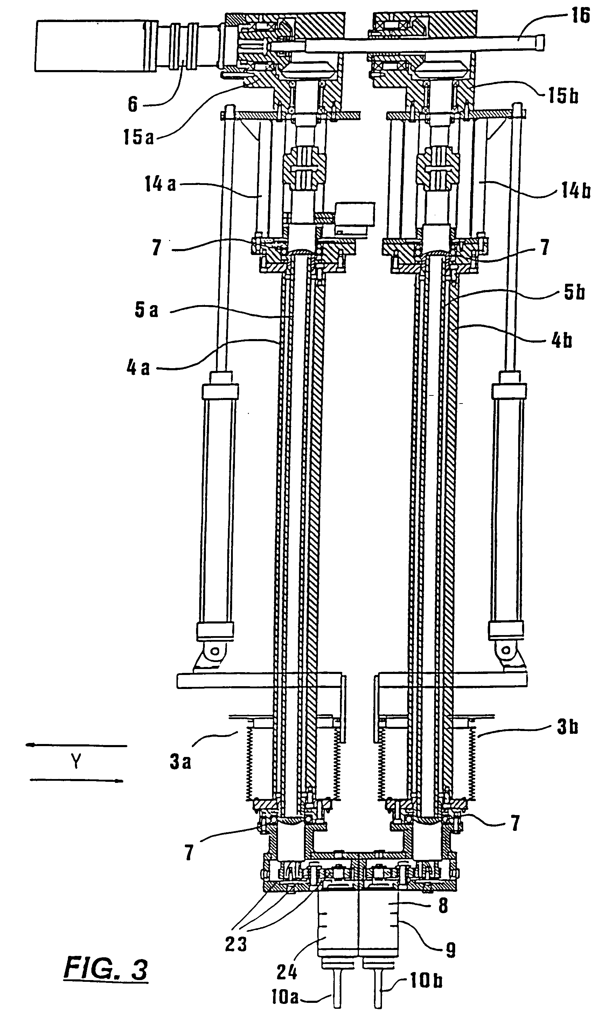

As can be observed in Figs. 2 to 4, although it is shown particularly in Fig. 3, the robot has two hollow tubular arms 5a and 5b, each one of which passes through a vertical bar 4, within which it can rotate, supported by bearings 7. A single first motor 6 makes said hollow tubular bars 5a and 5b rotate inside the respective bar 4. One end of at least one arm 5 is attached through a set of gearwheels 23 to the rotating part of a connector 8, which is supplied by a fixed duct 9, the rotating part of the connector 8 being connected by its upper end to the arm 5 and by its lower end to a washing jet 10. Thus, when the hollow tubular arm 5 rotates, the respective jet 10 will do likewise, it being supplied continuously with washing fluid through the connector 8, whose static part is connected to the input duct 9 and to the bar 4.

All this achieves two washing jets 10a and 10b with jets of fluid which can move along the three orthogonal Cartesian axes indicated and which can also rotate about themselves. If each axis has a robotized control, then a robot with four independent robotized movements is achieved.

Figures 2 and 4 show a bellows 11 which separates the upper part of the robot, situated to the exterior, from the lower part of same, situated inside the washing chamber of the washing machine, together with the mounting of the independent carriages 3a and 3b, their respective vertical bars 4a and 4b and respective second motors 12a and 12b, which actuate carriages 3a and 3b, permitting them to slide along carriage 1.

As shown in Figs. 3 and 4, the hollow tubular arms 5a and 5b are driven simultaneously by a single third motor 13 which is mounted on a bracket 14a and attached in turn to the bar 4a through an angular displacement gearbox 15a. The box 15a has a double output: a vertical lower output attached to the arm 5a and another horizontal output attached to a grooved shaft 16, upon which there slides a similar gearbox 15b linked to the arm 5b through a bracket 14b. Thus, as the arms 5a and 5b separate independently with the drive from the motors 12a and 12b, respectively, the box 15b slides on the shaft 16, while nevertheless maintaining the sole traction and synchronization of the arms 5a and 5b. To this end, the bars 4a and 4b rise and fall attached to the arms 5a and 5b. As the arms 5a and 5b are attached to the jets 10a and 10b, the jets of fluid from the jets 10a and 10b are always oriented in the same way.

Figure 5 shows the overall assembly of parts so arranged that the bars 4a and 4b rise and fall in a synchronized manner. A fourth motor 17 is mounted on the carriage 3a, pulling a first pinion 18 which in turn meshes with a first rack 19, which makes the bar 4a rise and fall. Similarly, the motor causes a striated shaft 20 to rotate, with which shaft is meshed a second pinion 21, meshed in turn with a second rack 22 for the ascent and descent of the bar 4b. The motor 17 thus causes the two bars 4a and 4b to rise and descend in a synchronized manner on the "z" axis, although the bars have an independent movement of relative withdrawal or approach on the "y" axis.

Furthermore, and due to reasons of mechanical design, a limitation is placed on the approach of the bars 5. In the preferred embodiment of the present invention a design for the end of one of the bars as shown in Fig. 3 is used, upon which end is mounted a set of gearwheels 23 which by means of three gearwheels transmits the movement to another rotary connector 24, similar to the connector 8 already described. In another embodiment of the invention, there may be two gearwheels, if a similar box is mounted on the other bar. Such an arrangement makes the jet washing 10a rotate in synchronization with the washing jet 10b and allows both washing jets to approach each other as closely as possible.

## Claims

1. A robot for machined parts washing machines, of the type which is provided with movement on the three Cartesian axes, including a first carriage (1) which slides along first horizontal guides, which make up the direction of the "x" axis, while second horizontal guides (2) are mounted on said first carriage, arranged perpendicularly to the first guides in the direction of the "y" axis, above which there slides at least a second carriage (3) on which is mounted a hollow vertical bar (4) movable in the direction of the "z" axis, a connector (8) supplied with washing fluid through a duct (9) fixed to the connector, said connector (8) having a rotating part, the robot further comprising a rotating washing jet (10) supplied continuously with a washing fluid through the connector (8) whose static part is connected to the duct, the connector (8) being fitted inside the washing chamber of the washing machine, characterized in that it comprises two second carriages (3), each of which is provided with a hollow tubular arm (5) to the interior of and coaxial to the respective hollow vertical bar (4), supported by its ends on bearings (7) and able to rotate about is own axis when driven by a motor (6), the lower end of the hollow tubular arm being attached solidly to the rotating part of the connector (8), so that the latter is connected by its upper end to the arm (5) and by the lower end to the washing jet (10), so that as the arm (5) rotates so too does the washing jet (10), the static part of the connector being connected to the hollow vertical bar (4)

2. A robot as claimed in Claim 1, characterized in that the two independent second carriages (3a, 3b) are mounted sliding on their respective pairs of guides, and each of them is provided with its corresponding assembly made up of a hollow vertical bar (4a, 4b) and a hollow tubular arm (5a, 5b), with each of the said second carriages (3a, 3b) being pulled by a respective motor (12a, 12b), while the two hollow tubular arms (5a, 5b) are driven simultaneously and in synchronized fashion by a single motor (13) supported rigidly by a bracket (14a) attached to the bar and actuating the two arms by means of two bevel-gear boxes (15a, 15b), each of which is provided with a vertical bottom output, attached to the respective hollow tubular arm, and a horizontal output associated with the motor (13) shaft.

3. A robot as claimed in Claims 1 and 2, characterized in that the hollow vertical bars (4a, 4b) are actuated simultaneously in an ascending or descending direction by means of a single motor (17) mounted on one of the said second carriages (3a), the shaft of said motor (17) being provided with pinions (18, 21) which act upon corresponding racks (19, 22) joined respectively onto the hollow vertical bars (4a, 4b).

4. A robot as claimed in Claims 1 to 3 characterized in that the rotating part of each washing jet connector (8, 24) is attached to its respective hollow tubular arm (5a, 5b) by means of a set of gearwheels (23), thus enabling each washing jet to rotate about its vertical axis.

## Patentansprüche

1. Roboter für Werkstück-Waschmaschinen mit Bewegung in den drei kartesischen Achsen einschließlich eines ersten Schlittens (1), der entlang ersten waagerechten Führungen gleitet, die die Richtung der x-Achse bilden, während zweite waagerechte Führungen (2) auf dem ersten Schlitten senkrecht zu den ersten Führungen in der y-Achse angeordnet sind, auf denen wenigstens ein zweiter Schlitten (3) gleitet, auf dem eine hohle senkrechte Stange (4) angebracht ist, die in Richtung der z-Achse beweglich ist, mit einem Anschluß (8), der mit einem Waschfluid über eine an dem Anschluß (8) befestigte Leitung (9) versorgt wird, welcher Anschluß (8) ein drehbares Teil aufweist und weiterhin eine drehbare Waschdüse (10) aufweist, die kontinuierlich mit einem Waschfluid von dem Anschluß (8) aus versorgt wird, dessen feststehendes Teil mit der Leitung verbunden ist, welcher Anschluß (8) innerhalb der Waschkammer der Waschmaschine angeordnet ist, dadurch **gekennzeichnet**, daß der Roboter zwei zweite Schlitten (3) umfaßt, von denen jeder mit einem hohlen rohrförmigen Arm (5) im Inneren und koaxial zu der jeweiligen hohlen senkrechten Stange (4) versehen ist, der abgestützt ist mit seinen Enden an Lagern (7) und in der Lage ist, sich um seine eigene Achse zu drehen, wenn er durch einen Motor (6) angetrieben wird, wobei das untere Ende des hohlen rohrförmigen Arms fest an dem drehbaren Teil des Anschlußes (8) angebracht ist, so daß das drehbare Teil des Anschlußes mit seinem oberen Ende mit dem Arm (5) und mit dem unteren Ende mit der Waschdüse (10) verbunden ist, so daß mit der Drehung des Armes (5) auch die Waschdüse (10) gedreht wird, wobei das feststehende Teil des Anschlußes mit der hohlen senkrechten Stange (4) verbunden ist.

2. Roboter nach Anspruch 1, dadurch **gekennzeichnet**, daß die beiden unabhängigen zweiten Schlitten (3a,3b) gleitend auf ihren jeweiligen Führungspaaren angebracht sind, daß jeder der Schlitten mit seiner entsprechenden Anordnung aus einer hohlen senkrechten Stange (4a,4b) und einem hohlen rohrförmigen Arm (5a,5b) versehen ist, wobei jeder der zweiten Schlitten (3a,3b) durch einen zugehörigen Motor (12a, 12b) gezogen wird, während die beiden hohlen rohrförmigen Arme (5a,5b) gleichzeitig und synchron durch einen einzigen Motor (13) angetrieben werden, der starr abgestützt ist durch einen Ansatz (14a) an der Stange und die beiden Arme mit Hilfe von zwei Kegelradgetrieben (15a, 15b) antreibt, von denen jedes mit einem senkrechten, bodenseitigen Ausgang versehen ist, der mit dem entsprechenden hohlen rohrförmigen Arm verbunden ist, und einem waagerechten Ausgang, der der Welle des Motors (13) zugeordnet ist.

3. Roboter nach Anspruch 1 und 2, dadurch **gekennzeichnet**, daß die hohlen senkrechten Stangen (4a,4b) gleichzeitig in aufsteigender oder absinkender Richtung mit Hilfe eines einzigen Motors (17) betätigt werden, der auf einem der zweiten Schlitten (3a) montiert ist, wobei die Welle des Motors (17) mit Ritzeln (18,21) versehen ist, die auf entsprechende Zahnstangen (19,22) einwirken, die mit den hohlen senkrechten Stangen (4a,4b) verbunden sind.

4. Roboter nach Anspruch 1 bis 3, dadurch **gekennzeichnet**, daß das drehbare Teil von jedem Waschdüsen-Anschluß (8,24) an dem jeweiligen hohlen rohrförmigen Arm (5a,5b) mit Hilfe eines Satzes von Zahnrädern (23) angebracht ist, so daß die Waschdüse um ihre senkrechte Achse drehbar ist.

## Revendications

1. Robot destiné à des machines de lavage de pièces usinées, du type à mouvements selon les trois axes cartésiens, comprenant un premier chariot (1) qui coulisse le long de premières glissières horizontales de guidage, qui constituent la direction suivant l'axe "x", tandis que des deuxièmes glissières horizontales de guidage (2) sont montées sur ledit premier chariot et disposées perpendiculairement aux premières glissières de guidage, dans la direction de l'axe "y", et au-dessus duquel coulisse au moins un deuxième chariot (3) sur lequel est montée une barre verticale creuse (4), mobile dans la direction de l'axe "z", un connecteur (8) alimenté en fluide de lavage par l'intermédiaire d'un conduit (9) fixé au connecteur, ledit connecteur (8) ayant une partie rotative, le robot comprenant en outre une lance rotative de lavage (10) alimentée en continu en fluide de lavage par l'intermédiaire du connecteur (8), dont la partie statique est reliée au conduit, le connecteur (8) étant adapté à l'intérieur de la chambre de lavage de la machine de lavage, caractérisé en ce que le robot comprend deux deuxièmes chariots (3), chacun étant pourvu d'un bras tubulaire creux (5) situé à l'intérieur de la barre verticale creuse (4) correspondante et de manière coaxiale par rapport à celle-ci, en étant soutenu à ses extrémités par des paliers (7) et en étant propre à tourner autour de son axe propre lorsqu'il est entraîné par un moteur (6), l'extrémité inférieure du bras tubulaire creux étant solidement fixée à la partie rotative du connecteur (8), de telle manière que ce dernier soit relié, par son extrémité supérieure, au bras (5) et, par son extrémité inférieure, à la lance de lavage (10), si bien que, lorsque le bras (5) tourne, il en est de même pour la lance de lavage (10), la partie statique du connecteur étant reliée à la barre verticale creuse (4).

2. Robot selon la revendication 1, caractérisé en ce que les deux deuxièmes chariots (3a, 3b) indépendants sont montés de manière à coulisser sur leurs paires respectives de glissières de guidage, et en ce que chacun d'eux est pourvu de son ensemble correspondant, consistant en une barre verticale creuse (4a, 4b) et en un bras tubulaire creux (5a, 5b), chacun desdits deuxièmes chariots (3a, 3b) étant commandé par un moteur (12a, 12b) respectif, tandis que les deux bras tubulaires creux (5a, 5b) sont entraînés simultanément et de manière synchrone par un seul moteur (13), rigidement soutenu par un support (14a) fixé à la barre et actionnant les deux bras au moyen de deux boîtes d'engrenages coniques (15a, 15b), chacune étant pourvue d'un arbre de sortie, inférieur et vertical, relié au bras tubulaire creux correspondant, et d'un arbre horizontal de sortie associé à l'arbre du moteur (13).

3. Robot selon l'une des revendications 1 et 2, caractérisé en ce que les barres verticales creuses (4a, 4b) sont actionnées simultanément dans le sens ascendant ou dans le sens descendant au moyen d'un seul moteur (17), monté sur l'un desdits deuxièmes chariots (3a), l'arbre dudit moteur (17) étant pourvu de pignons (18, 21) qui agissent sur des crémaillères (19, 22) correspondantes, respectivement attachées aux barres verticales creuses (4a, 4b).

4. Robot selon l'une des revendications 1 à 3, caractérisé en ce que la partie rotative de chaque connecteur de lance de lavage (8, 24) est fixée à son bras tubulaire creux (5a, 5b) respectif au moyen d'un jeu de roues dentées (23), pour ainsi permettre à chaque lance de lavage de tourner autour de son axe vertical.
